# FASCICULE DE BREVET EUROPEEN

(11) **EP 2 278 700 B1**
(45) Date de publication et mention de la délivrance du brevet: **05.04.2017**
(21) Numéro de dépôt: 09166395.5
(22) Date de dépôt: 24.07.2009
(51) Int. Cl.: H02P 6/00, H02P 25/02, H02P 25/22, H02P 25/04, H02P 25/024

(54) **Système et procédé de commande d'une machine synchrone double étoile à neutres non reliés**
Steuersystem und -verfahren einer Synchronmaschine mit Doppelsternschaltung mit nicht gebundenen Nullleitern
System and method for controlling a double-star synchronous machine with unconnected neutrals

(43) Date de publication de la demande: 26.01.2011
(73) Titulaire: Thales, 92400 Courbevoie (FR)
(72) Inventeur: Hadni, Rachid, 95370 Montigny-lès-Cormeilles (FR); Michel, Raymond, B-6110 Montigny-le-Tilleul (BE); Guillaume, Michel, B-1428 Lillois (BE)
(74) Mandataire: Esselin, Sophie

(56) Documents cités:
- EP-A- 1 792 770
- JP-A- 61 128 770
- JP-A- 2003 102 189
- JP-A- 2003 174 790

## Description

L'invention porte sur un système et un procédé de commande d'une machine synchrone double étoile à neutres non reliés.

L'utilisation d'actionneurs électromécaniques, comprenant un moteur électrique, et notamment un machine synchrone double étoile, particulièrement dans les domaines aéronautique et spatial nécessitent un niveau élevé de fiabilité ainsi qu'une robustesse de fonctionnement en cas de panne afin de garantir la disponibilité des ressources nécessaires.

Il existe des systèmes mettant en oeuvre une redondance froide, consistant à doubler ou tripler des sous-ensembles du système, non utilisés en fonctionnement nominal, mais sur lequel on commute le fonctionnement du système en cas de panne du sous-système nominal.

Lors d'une redondance froide de la partie électrique d'un système, la partie électrique nominale du système est doublée ou triplée respectivement en une ou deux parties électriques redondantes. En cas de panne, le fonctionnement est commuté sur une partie électrique redondante du système.

En ce cas, il est nécessaire d'utiliser un commutateur de puissance résistant aux cas de pannes, ce qui implique un niveau de complexité et un coût élevé. Cette solution déporte le problème de robustesse en cas de panne vers le commutateur de puissance.

Un exemple de réalisation d'un tel système de machine à double étoile ou à trois phases est illustré dans le document "Architectures segmentées d'alimentation à convertisseurs modulaires pour les actionneurs d'avion Fonctionnement en modes dégradés" de F. Meibody-Tabar, B. Davat, R. Meuret et S. Vieillard, paru dans le Journal sur l'enseignement des sciences et technologies de l'information et des systèmes Volume 4, Hors-série 1, 13 (2005), par exemple disponible à l'adresse web : http://www.j3ea.org/index.php?option=article&access=standard&Itemid=129 &url=/articles/j3ea/pdf/2005/06/j3ea2005613.pdf.

En cas de redondance froide du moteur électrique de l'actionneur, lors d'une panne détectée, le fonctionnement est basculé sur un moteur redondant. Le coût d'une telle réalisation est nettement augmenté, ainsi que la masse du système, ce qui est très gênant notamment dans une application spatiale.

Un exemple de réalisation d'un tel système est illustré dans le document "Architectures segmentées d'alimentation à convertisseurs modulaires pour les actionneurs d'avion ; fonctionnements en modes dégradés" de F. Meibody-Tabar, B. Davat, R. Meuret et S. Vieillard par exemple disponible à l'adresse web : http://www.bibsciences.org/bibsup/j3ea/full_HS/vol4_HS1/13/trans/j3ea20056 13.ppt.

Lors d'une redondance chaude, le système électrique est doublé ou triplé, un système de mélange devant assurer la transmission de l'information ou puissance vers la partie mécanique. En cas de panne, seule la partie saine continue à transmettre l'information vers la partie mécanique. Lors d'une redondance chaude, soit la partie mécanique du moteur électrique peut être redondée en deux ou trois moteurs, soit la partie électrique, soit en totalité, à savoir les deux parties électrique et mécanique. Ces solutions en redondance chaude sont intéressantes par rapport à la redondance froide car elles permettent une continuité de service pendant la panne, il n'y a pas de reconfiguration du système.

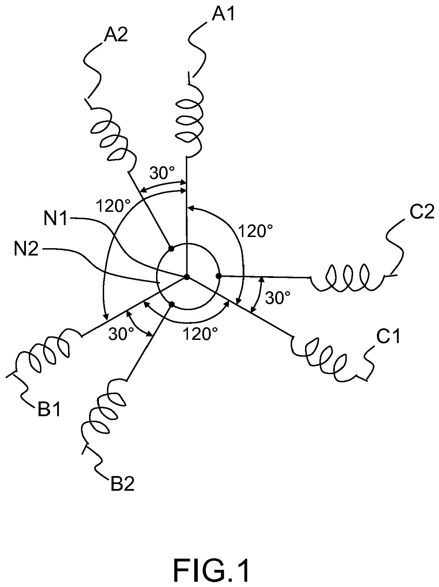

La figure 1 illustre une machine synchrone double étoile ou MSDE, qui est un moteur électrique synchrone dont les six phases ou six branches sont câblées trois à trois en étoiles : A1, B1, et C1 sont les trois premières branches formant la première étoile de premier neutre N1, et A2, B2, et C2, sont les trois deuxièmes branches formant la deuxième étoile de deuxième neutre N2. Le neutre d'une étoile est le point de raccordement central des branches de l'étoile, aussi la machine synchrone double étoile possède deux neutres N1 et N2. Ces points neutres peuvent être reliés à un élément de circuit, tel une source ou une impédance, ou être laissés flottants. Lorsque les deux neutres sont reliés il s'agit d'une machine synchrone double étoile à neutres reliés ou pilotés, et lorsque les deux neutres sont flottants il s'agit une machine synchrone double étoile à neutres flottants ou non-reliés.

Pour une machine synchrone double étoile telle qu'illustrée sur la figure 1, comprenant deux étoiles décalées de 30°, les trois branches A1, B1, et C1 de la première étoile sont espacées d'une portion angulaire de 120°, correspondant à 360°/N pour N=3, ainsi que les trois branches A2, B2, et C2, de la deuxième étoile.

La MSDE décalée de 30° est alimentée par deux groupes de sources de courant alternatif, les courants des branches ou phases de chaque étoile étant alimentées par un groupe respectif.

Par exemple, le document JP 2003 102189 A divulgue une machine synchrone double-étoile semblable à celle de la figure 1. Le document JP 61 128770 A décrit un système de commande d'une machine synchrone double-étoile à neutres reliés comprenant une pluralité d'unités de commande associées à des couples de branches séparées d'un angle de 0 ou 180°.

Un but de l'invention est de limiter le coût et la masse d'un système de commande d'une MSDE à neutres non reliés, notamment pour des applications aérospatiales ou aéronautiques.

Aussi, il est proposé, selon un aspect de l'invention, un système de commande d'une machine synchrone double étoile à neutres non reliés, les première et deuxième étoiles, à respectivement N premières branches régulièrement espacées et N deuxièmes branches régulièrement espacées, étant décalées entre-elles d'un angle tel que lesdites 2N branches forment N couples formés d'une première branche et d'une deuxième branche séparées d'un angle sensiblement égal à 90°. Le système est alimenté par une source primaire d'énergie électrique et comprend des moyens de conversion de l'énergie électrique délivrée par ladite source primaire en 2N sources secondaires respectives d'alimentation desdites 2N branches, N étant supérieur ou égal à trois. Le système comprend N unités de commande respectives de deux desdites sources secondaires d'alimentation associées à un desdits couples de branches séparées d'un angle sensiblement égal à 90°.

Un tel système permet d'avoir un système de commande d'une machine synchrone double étoile à fiabilité améliorée et coût réduit, car notamment le nombre de moyens de conversion est limité, par exemple à six pour une double étoile à trois branches chacune, limitant le coût ainsi que la masse embarquée.

Par exemple, le document JP 2003 102189 A divulgue une machine synchrone double-étoile semblable a celui de la figure 1. Le document JP 61128770A décrit un système de commande d'une machine synchrone double-étoile à neutres reliés comprenant une pluralité d'unités de commande associés à des couples de branches séparées d'un angle de 0 au 180°.

En outre, un tel système peut être totalement ségrégué en N parts depuis la consigne principale jusqu'au moteur électrique, permettant d'assurer le pilotage de la machine synchrone double étoile via N unités de commande implémentés sous quelque forme que ce soit (logicielle, logique câblée, logique programmée, contrôle analogique) de manière autonome sans nécessiter de reconfigurer les organes de pilotage en cas de panne.

Selon un mode de réalisation, N vaut 3, et lesdites deux étoiles comprennent chacune 3 branches régulièrement espacées, et sont décalées d'un angle sensiblement égal à 30°.

Ce mode de réalisation est celui présentant le meilleur rapport coût par rapport à l'efficacité.

Dans un mode de réalisation, lesdits moyens de conversion comprennent N éléments de conversion respectivement dédiés à un desdits couples de branches séparées d'un angle sensiblement égal à 90°.

Cette redondance augment la fiabilité du système.

Par exemple, au moins un élément de conversion comprend un amplificateur de puissance, tel un onduleur ou un cyclo-convertisseur.

Selon un mode de réalisation, ladite source primaire d'énergie électrique comprend une batterie électrique, ou N batteries électriques reliées respectivement auxdits N éléments de conversion, ou une alimentation secteur, ou N alimentations secteur reliées respectivement auxdits N éléments de conversion.

L'invention peut s'adapter à tout type de source primaire d'énergie électrique et tout moyen de conversion de l'énergie électrique, à courant continu ou courant alternatif.

Selon un mode de réalisation, le système comprend, en outre, un capteur de mesure de la position angulaire du rotor de ladite machine et au moins une boucle de rétroaction de entre ledit capteur de mesure de la position angulaire du rotor et une unité de commande.

Une telle boucle de rétroaction permet d'améliorer la précision du fonctionnement du système.

Dans un mode de réalisation, le système comprend au moins un capteur de mesure du courant fourni par une source d'alimentation secondaire à une machine virtuelle biphasée à 90° formée par un desdits couples de branches, et au moins une boucle de rétroaction entre ledit capteur de mesure de courant et une unité de commande.

Une telle boucle de rétroaction permet d'améliorer la précision du fonctionnement du système.

Selon un mode de réalisation, lesdites unités de commandes comprennent une entrée recevant une consigne de fonctionnement de ladite machine synchrone double étoile à neutres non reliés.

Par exemple, ladite consigne de fonctionnement comprend au moins un paramètre de fonctionnement de ladite machine synchrone double étoile à neutres non reliés parmi la vitesse de rotation du rotor, le couple à fournir par le rotor, la tension électrique aux bornes de ladite machine électrique, l'intensité de courant électrique dans une branche de la machine électrique, ou l'intensité de courant électrique fournie par ladite source primaire d'énergie électrique.

Le système s'adapte ainsi à tout type de commande de la machine synchrone double étoile.

Il est également proposé, selon un autre aspect de l'invention, un procédé de commande d'une machine synchrone double étoile à neutres non reliés, les première et deuxième étoiles, à chacune N branches régulièrement espacées, étant décalées entre-elles d'un angle tel que lesdites 2N branches forment N couples de branches dont la première branche et la deuxième branche appartiennent respectivement auxdites première et deuxième étoiles et forment entre-elles un angle sensiblement égal à 90°, dans lequel on convertit de l'énergie électrique délivrée par ladite source primaire en 2N sources secondaires respectives d'alimentations desdites 2N branches, N étant supérieur ou égal à trois, dans laquelle on utilise N unités de commande respectives de deux desdites sources secondaires d'alimentation associées à un desdits couples de branches.

L'invention sera mieux comprise à l'étude de quelques modes de réalisation décrits à titre d'exemples nullement limitatifs et illustrés par les dessins annexés sur lesquels :
- la figure 1 illustre schématiquement une machine synchrone à double étoile à chacune trois branches et neutres non reliés de l'état de la technique ; et
- les figures 2, 3, 4 et 5 illustre plus en détail un système selon plusieurs aspects de l'invention ;

Sur les différentes figures, les éléments ayant des références identiques sont identiques.

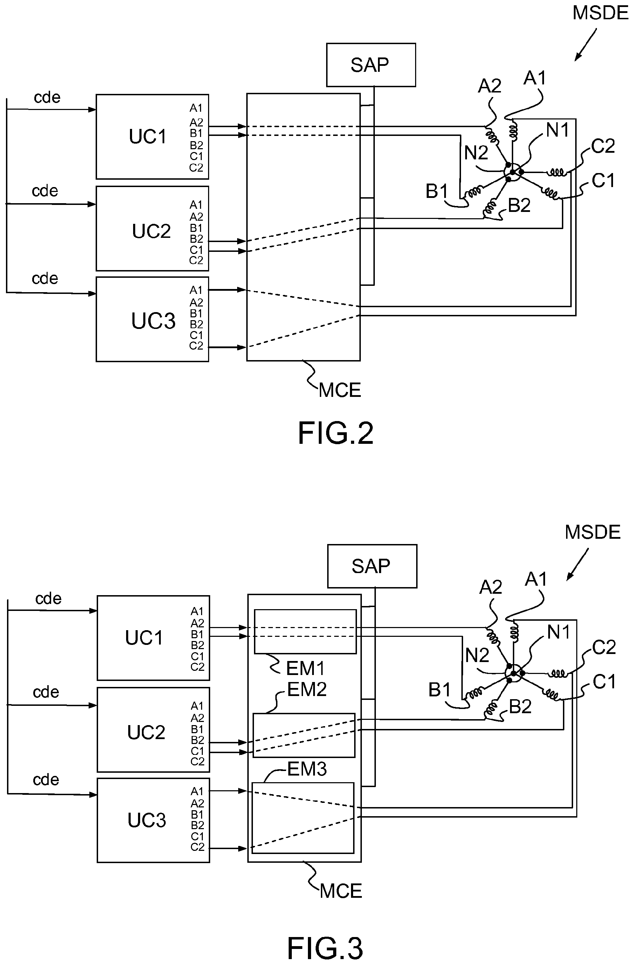

Sur la figure 2 est représenté un système de commande d'une machine synchrone double étoile MSDE à neutres non reliés, chaque étoile comprenant trois branches. Bien entendu, l'invention peut s'appliquer à des étoiles ayant un nombre N de branches quelconque.

Dans le cas d'étoiles à trois branches, comme illustré sur la figure 2 celles-ci sont décalées de 30°, de sorte que les 6 branches, i.e. les trois premières branches A1, B1, C1 de la première étoile et les trois deuxièmes branches A2, B2, C2 de la deuxième étoile, forment trois couples (A1, C2), (C1, B2) et (B1, A2) respectivement formé d'une première branche de la première étoile et d'une deuxième branche de la deuxième étoile sensiblement perpendiculaires. On a ainsi trois moteurs virtuels biphasés à 90° correspondant chacun à un desdits couples.

Dans la suite de la description, les exemples décrits comprennent des étoiles qui ont trois branches, i.e. N=3, mais l'invention s'applique à des étoiles à N branches, quelque soit N entier supérieur ou égal à trois.

Chaque branche d'une étoile comprend une bobine ou inductance. Pour chaque étoile, les trois branches A1, B1 et C1, ou A2, B2 et C2 sont espacées de 120° (=360°/N pour N=3).

Une commande ou consigne cde de fonctionnement de la MSDE est transmise à trois unités de commande UC1, UC2 et UC3, respectivement dédiées aux couples (B1, A2), (C1, B2) et (A1, C2), une source d'alimentation primaire SAP, pouvant être à courant continu ou à courant alternatif.

Le système comprend, en outre, un module de conversion MCE de l'énergie électrique délivrée par ladite source primaire SAP en 2N sources secondaires respectives d'alimentations desdites 2N branches, en l'occurrence des 6 branches A1, B1, C1, A2, B2, et C2 de la machine synchrone à double étoile MSDE. Les trois unités de commande UC1, UC2 et UC3 commandent respectivement l'alimentation par le module de conversion MCE des couples de branches ou moteurs virtuels (B1, A2), (C1, B2) et (A1, C2).

Les neutres N1 et N2 des deux étoiles étant non reliés, chaque moteur biphasé virtuel est constitué de deux branches ou bobines appartenant, chacune, à des étoiles électriques différentes. Aussi, la condition pour fonctionner correctement sur deux fois trois phases est d'équilibrer électriquement chaque étoile. Rencontrer cette contrainte en pilotant la machine synchrone double étoile MSDE sous forme de trois moteurs biphasées virtuels impose d'équilibrer les deux étoiles et donc l'effort demandé à chaque moteur virtuel (B1, A2), (C1, B2) et (A1, C2).

En cas de défaut d'un des N sous-système (UCi, MCE ou EMi, ou branche de la machine électrique), le sous-système défaillant est inhibé pour retrouver un fonctionnement en circuit ouvert, ainsi le pilotage fait travailler à égalité les N-1 (N-1=2 dans les exemples décrits pour lesquels N=3) moteurs virtuels restants.

Aucun cas de simple panne ne conduit à un fonctionnement dans lequel un moteur virtuel assume la charge totale.

Le pilotage ou commande de la machine synchrone double étoile MSDE à neutres non reliés est réalisé par un contrôle vectoriel. Le contrôle vectoriel d'un moteur synchrone consiste à injecter dans les branches du stator des courants qui permettent de positionner précisément le vecteur d'induction statorique. Par une mesure de la position du rotor, le pilotage est capable, grâce au contrôle vectoriel, de positionner systématiquement le vecteur d'induction statorique en quadrature avec le vecteur d'induction rotorique, ce qui fera apparaître le couple de rotation.

Des outils mathématiques, tels les transformées de Park, ou de Concordia ont été développés pour étudier le contrôle vectoriel et l'auto-pilotage. Ces outils mathématiques permettent de réduire un moteur polyphasé à n phases autopiloté en grandeurs continues : courant direct, courant en quadrature, ou courant homopolaire et leurs impédances associées.

Les transformées de Park permettent de passer de grandeurs hexaphasées à des grandeurs continues afin de contrôler la vitesse et/ou la position angulaire du moteur. Pour une machine synchrone double étoile, il existe une multitude de matrices de transformation, selon les hypothèses de travail, aboutissant à différents outils méthodologiques pour la modélisation des machines polyphasées, comme par exemple ceux mentionnés dans la Thèse de Doctorat : "Modélisation Dynamique et Commande d'une MSDE Alimentée par Onduleurs MLI en Mode Normale et en Mode Dégradé" réalisée par Mourad MERABTENE.

A partir de la modélisation mathématique de l'algorithme de pilotage de la machine synchrone double étoile à neutres non reliés il est possible de piloter la machine synchrone double étoile en mode dégradé sans pour autant reconfigurer l'algorithme de pilotage contrairement aux conclusions faites dans la Thèse citée ci-dessus.

Ainsi l'algorithme de contrôle est implémenté dans N sous-systèmes de pilotage fonctionnant de manière autonome sans interaction avec les N-1 autres sous-systèmes de pilotage. Dès lors, le pilotage de la machine synchrone double étoile est assuré par N sous-systèmes de pilotage en mode nominal et par N-1 sous-systèmes de pilotage en cas de panne d'un des N sous-systèmes.

En effet, en cas d'ouverture d'une des bobines ou branches de la machine synchrone double étoile, une ondulation de couple survient due au déséquilibrage de l'alimentation de la machine synchrone double étoile, mais si on ouvre la bobine qui lui est orthogonale, sans changer l'algorithme, on constate que le système se rééquilibre naturellement et l'ondulation de couple disparaît.

Ainsi, un système selon l'invention permet de garantir les performances en cas de panne en coupant l'alimentation du moteur biphasé virtuel sans reconfigurer l'algorithme de pilotage d'une unité de commande.

En outre il n'est pas nécessaire de reconfigurer une unité de commande, car les deux autres s'adaptent et sont déjà opérationnelles, ce qui est important, par exemple lors d'une phase de décollage d'une fusée ou d'un aéronef, période durant laquelle une panne ne doit pas entraîner une reconfiguration trop longue d'une unité de commande, qui pourrait entraîner de graves conséquences.

Le système selon l'invention permet de passer d'une machine synchrone double étoile à neutres non reliés à trois moteurs biphasés virtuels.

Le module de conversion MCE peut comprendre 3 éléments de conversion EM1, EM2 et EM3 respectivement dédiés à un desdits couples de branches séparées d'un angle sensiblement égal à 90°, formant un moteur virtuel biphasé à 90°, comme illustré sur la figure 3, comprenant un amplificateur de puissance tel un onduleur ou un cyclo-convertisseur.

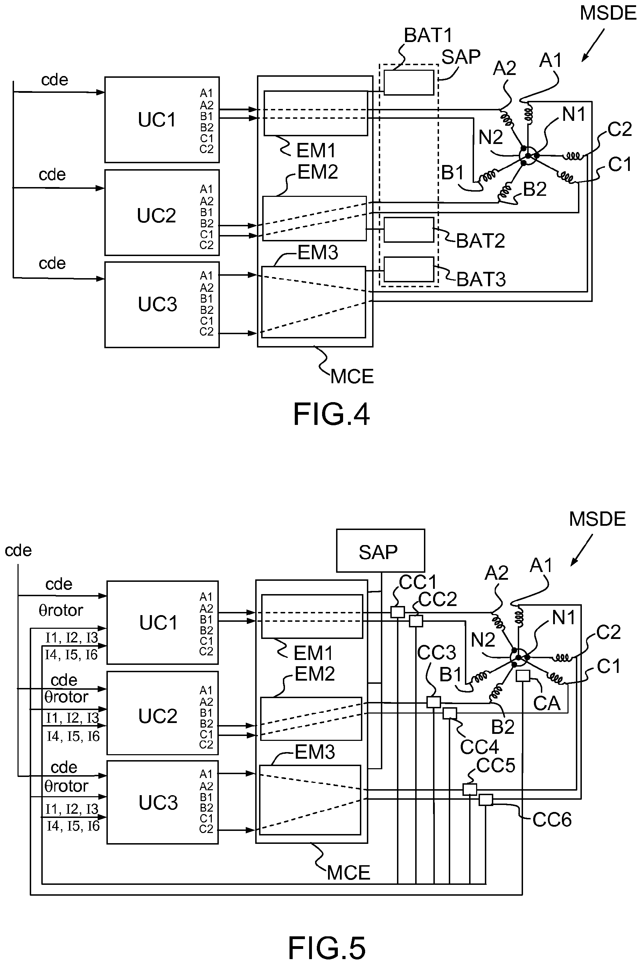

En outre, et de manière indépendante, la source d'alimentation primaire SAP peut comprendre trois batteries BAT1, BAT2, et BAT3, comme représenté sur la figure 4.

Ainsi la robustesse du système est améliorée, en limitant les risques de propagation de pannes suite à la ségrégation des sous-systèmes contrôlant les machines virtuelles.

Le système peut également comprendre un capteur de mesure de la position angulaire CA du rotor de la machine synchrone double étoile et au moins une boucle de rétroaction de entre le capteur de mesure de la position angulaire du rotor CA et au moins une unité de commande, en l'espèce sur la figure 5, une boucle de rétroaction sur chacune des trois unités de commande UC1, UC2 et UC3. En outre, de manière optionnelle, le système peut comprendre au moins un capteur de mesure du courant fourni par une source d'alimentation secondaire à une machine virtuelle biphasée à 90° formée par un desdits couples de branches, et au moins une boucle de rétroaction de entre ledit capteur de mesure de courant et une unité de commande.

En l'espèce, chacune des sources secondaires du système de la figure 5, comprend une boucle de rétroaction de chacun des six capteurs CC1, CC2, CC3, CC4, CC5, et CC6 de mesure de courant I1, I2, I3, I4, I5 et I6. Bien entendu, il s'agit du nombre maximum de boucles de rétroactions, possible, mais un nombre plus limité de boucles de rétroaction est également possible.

Ces boucles de rétroactions de données mesurées permettent aux unités de commande d'améliorer la précision de commande de la machine synchrone double étoile MSDE.

Un système selon l'invention s'applique donc à la commande de toute machine synchrone double étoile à neutres non reliés, par exemple une machine synchrone double étoile d'un actionneur électromécanique.

La robustesse d'un tel système est ainsi améliorée à coût réduit.

## Revendications

1. Système de commande d'une machine synchrone double étoile (MSDE) à neutres (N1, N2) non reliés, les première et deuxième étoiles, à respectivement N premières branches (A1, B1, C1) régulièrement espacées et N deuxièmes branches (A2, B2, C2) régulièrement espacées, étant décalées entre-elles d'un angle tel que lesdites 2N branches forment N couples ((B1, A2), (C1, B2) et (A1, C2)) formés d'une première branche et d'une deuxième branche séparées d'un angle sensiblement égal à 90°, N étant supérieur ou égal à trois, le système étant alimenté par une source primaire d'énergie électrique (SAP) et comprenant des moyens de conversion de l'énergie électrique (MCE) délivrée par ladite source primaire (SAP) en 2N sources secondaires respectives d'alimentations desdites 2N branches, **caractérisé en ce qu'**il comprend N unités de commande (UC1, UC2, UC3) respectives de deux desdites sources secondaires d'alimentation associées à un desdits couples de branches ((B1, A2), (C1, B2), (A1, C2)) séparées d'un angle sensiblement égal à 90°.

2. Système selon la revendication 1, dans lequel, N valant 3, lesdites deux étoiles comprennent chacune 3 branches ((A1, B1, C1), (A2, B2, C2)) régulièrement espacées, et sont décalées d'un angle sensiblement égal à 30°.

3. Système selon l'une des revendications précédentes, dans lequel lesdits moyens de conversion (MCE) comprennent N éléments de conversion (EM1, EM2, EM3) respectivement dédiés à un desdits couples de branches ((B1, A2), (C1, B2), (A1, C2)) séparées d'un angle sensiblement égal à 90°.

4. Système selon la revendication 3, dans lequel au moins un élément de conversion (EM1, EM2, EM3) comprend un amplificateur de puissance.

5. Système selon la revendication 4, dans lequel un amplificateur de puissance comprend un onduleur ou un cyclo-convertisseur.

6. Système selon l'une des revendications précédentes, dans lequel ladite source primaire d'énergie électrique (SAP) comprend une batterie électrique, ou N batteries électriques (BAT1, BAT2, BAT3) reliées respectivement auxdits N éléments de conversion (EM1, EM2, EM3), ou une alimentation secteur, ou N alimentations secteur reliées respectivement auxdits N éléments de conversion (EM1, EM2, EM3).

7. Système selon l'une des revendications précédentes comprenant en outre un capteur de mesure de la position angulaire (CA) du rotor de ladite machine (MSDE) et au moins une boucle de rétroaction de entre ledit capteur de mesure de la position angulaire (CA) du rotor et une unité de commande (UC1, UC2, UC3).

8. Système selon l'une des revendications précédentes, comprenant au moins un capteur de mesure du courant (CC1, CC2, CC3, CC4, CC5, CC6) fourni par une source d'alimentation secondaire à une machine virtuelle biphasée à 90° formée par un desdits couples de branches ((B1, A2), (C1, B2), (A1, C2)), et au moins une boucle de rétroaction de entre ledit capteur de mesure de courant (CC1, CC2, CC3, CC4, CC5, CC6) et une unité de commande (UC1, UC2, UC3).

9. Système selon l'une des revendications précédentes dans lequel lesdites unités de commandes (UC1, UC2, UC3) comprennent une entrée recevant une consigne (cde) de fonctionnement de ladite machine synchrone double étoile (MSDE) à neutres (N1, N2) non reliés.

10. Système selon la revendication 9, dans lequel ladite consigne de fonctionnement (cde) comprend au moins un paramètre de fonctionnement de ladite machine synchrone double étoile (MSDE) à neutres (N1, N2) non reliés parmi la vitesse de rotation du rotor, le couple à fournir par le rotor, la tension électrique aux bornes de ladite machine électrique, l'intensité de courant électrique dans une branche de la machine électrique, ou l'intensité de courant électrique fournie par ladite source primaire d'énergie électrique.

11. Procédé de commande d'une machine synchrone double étoile (MSDE) à neutres (N1, N2) non reliés, les première et deuxième étoiles, à respectivement N premières branches (A1, B1, C1) régulièrement espacées et N deuxièmes branches (A2, B2, C2) régulièrement espacées, étant décalées entre-elles d'un angle tel que lesdites 2N branches forment N couples ((B1, A2), (C1, B2) et (A1, C2)) formés d'une première branche et d'une deuxième branche séparées d'un angle sensiblement égal à 90°, N étant supérieur ou égal à trois, **caractérisé en ce que** l'on utilise N unités de commande (UC1, UC2, UC3) respectives de deux desdites sources secondaires d'alimentation associées à un desdits couples de branches ((B1, A2), (C1, B2) et (A1, C2)).

## Patentansprüche

1. System zum Steuern einer Doppelstern-Synchronmaschine (MSDE) mit unverbundenen Nullleitern (N1, N2), wobei der erste und der zweite Stern, mit jeweils N gleichmäßig beabstandeten ersten Zweigen (A1, B1, C1) und N gleichmäßig beabstandeten zweiten Zweigen (A2, B2, C2), voneinander um einen Winkel versetzt sind, so dass die 2N Zweige N Paare ((B1, A2), (C1, B2) und (A1, C2)) bilden, von einem ersten Zweig und einem zweiten Zweig gebildet, die um einen Winkel von im Wesentlichen gleich 90° voneinander getrennt sind, wobei N gleich oder größer als drei ist, wobei das System von einer primären Elektroenergiequelle (SAP) versorgt wird und Mittel zum Umwandeln der von der primären Quelle (SAP) gelieferten elektrischen Energie in 2N jeweilige sekundäre Versorgungsquellen der 2N Zweige umfasst, **dadurch gekennzeichnet, dass** es N jeweilige Steuereinheiten (UC1, UC2, UC3) von zwei der sekundären Versorgungsquellen umfasst, die mit einem der Zweigpaare ((B1, A2), (C1, B2), (A1, C2)) assoziiert sind, die um einen Winkel von im Wesentlichen gleich 90° getrennt sind.

2. System nach Anspruch 1, bei dem, wenn N den Wert 3 hat, die beiden Sterne jeweils drei gleichmäßig voneinander beanstandete Zweige ((A1, B1, C1), (A2, B2, C2)) umfassen und um einen Winkel von im Wesentlichen gleich 30° versetzt sind.

3. System nach einem der vorherigen Ansprüche, bei dem die Wandlungsmittel (MCE) N Wandlungselemente (EM1, EM2, EM3) umfassen, die jeweils einem der Zweigpaare ((B1, A2), (C1, B2), (A1, C2)) dediziert sind, die um einen Winkel von im Wesentlichen gleich 90° getrennt sind.

4. System nach Anspruch 3, bei dem wenigstens ein Wandlungselement (EM1, EM2, EM3) einen Leistungsverstärker umfasst.

5. System nach Anspruch 4, bei dem ein Leistungsverstärker einen Wechselrichter oder einen Frequenzumrichter umfasst.

6. System nach einem der vorherigen Ansprüche, bei dem die primäre Elektroenergiequelle (SAP) eine Elektrobatterie oder N Elektrobatterien (BAT1, BAT2, BAT3) umfasst, die jeweils mit den N Wandlungselementen (EM1, EM2, EM3) verbunden sind, oder einen Versorgungssektor oder N Versorgungssektoren, die jeweils mit den N Wandlungselementen (EM1, EM2, EM3) verbunden sind.

7. System nach einem der vorherigen Ansprüche, das ferner einen Sensor zum Messen der Winkelposition (CA) des Rotors der Maschine (MSDE) und wenigstens eine Rückkopplungsschleife zwischen dem Sensor zum Messen der Winkelposition (CA) des Rotors und einer Steuereinheit (UC1, UC2, UC3) umfasst.

8. System nach einem der vorherigen Ansprüche, das wenigstens einen Sensor zum Messen des Stroms (CC1, CC2, CC3, CC4, CC5, CC6), der von einer sekundären Versorgungsquelle zu einer virtuellen zweiphasigen Maschine mit 90° geliefert wird, gebildet von einem der Zweigpaare ((B1, A2), (C1, B2), (A1, C2)), und wenigstens eine Rückkopplungsschleife zwischen dem Sensor zum Messen des Stroms (CC1, CC2, CC3, CC4, CC5, CC6) und einer Steuereinheit (UC1, UC2, UC3) umfasst.

9. System nach einem der vorherigen Ansprüche, bei dem die Steuereinheiten (UC1, UC2, UC3) einen Eingang umfassen, der einen Betriebssollwert (cde) der Doppelstern-Synchronmaschine (MSDE) mit unverbundenen Nullleitern (N1, N2) empfängt.

10. System nach Anspruch 9, bei dem der Betriebssollwert (cde) wenigstens einen Betriebsparameter der Doppelstern-Synchronmaschine (MSDE) mit unverbundenen Nullleitern (N1, N2) aus der Drehzahl des Rotors, dem vom Rotor zu liefernden Drehmoment, der elektrischen Spannung an den Anschlüssen der Elektromaschine, der Intensität von elektrischem Strom in einem Zweig der Elektromaschine oder der Intensität von elektrischem Strom von der primären Elektroenergiequelle umfasst.

11. Verfahren zum Steuern einer Doppelstern-Synchronmaschine (MSDE) mit unverbundenen Nullleitern (N1, N2), wobei der erste und der zweite Stern, mit jeweils gleichmäßig beabstandeten N ersten Zweigen (A1, B1, C1) und gleichmäßig beabstandeten N zweiten Zweigen (A2, B2, C2), voneinander um einen Winkel versetzt sind, so dass die 2N Zweige N Paare ((B1, A2), (C1, B2) und (A1, C2)) bilden, von einem ersten Zweig und einem zweiten Zweig gebildet, die um einen Winkel von im Wesentlichen gleich 90° getrennt sind, wobei N gleich oder größer als drei ist, **dadurch gekennzeichnet, dass** N jeweilige Steuereinheiten (UC1, UC2, UC3) von zwei der zweiten sekundären Versorgungsquellen benutzt werden, die mit einem der Zweigpaare ((B1, A2), (C1, B2) und (A1, C2)) assoziiert sind.

## Claims

1. A system for controlling a double-star synchronous machine (MSDE) with unconnected neutrals (N1, N2), the first and second stars, each with N first branches (A1, B1, C1) spaced regularly and N second branches (A2, B2, C2) spaced regularly, being offset from one another by an angle such that said 2N branches form N pairs ((B1, A2), (C1, B2) and (A1, C2)) formed by a first branch and a second branch separated by an angle substantially equal to 90°, N being greater than or equal to three, the system being supplied by a primary source of electric energy (SAP) and comprising means of converting the electric energy (MCE) delivered by said primary source (SAP) into 2N respective secondary supply sources of said 2N branches, **characterised in that** it comprises respective N control units (UC1, UC2, UC3) of two of said secondary supply sources associated with one of said pairs of branches ((B1, A2), (C1, B2), (A1, C2)) separated by an angle substantially equal to 90°.

2. The system according to Claim 1 wherein, the value of N being 3, said two stars each comprise 3 branches ((A1, B1, C1), (A2, B2, C2)) that are spaced regularly and are offset by an angle substantially equal to 30°.

3. The system according to either of the preceding claims, wherein said conversion means (MCE) comprise N conversion elements (EM1, EM2, EM3) each dedicated to one of said pairs of branches ((B1, A2), (C1, B2), (A1, C2)) separated by an angle substantially equal to 90°.

4. The system according to Claim 3, wherein at least one conversion element (EM1, EM2, EM3) comprises a power amplifier.

5. The system according to Claim 4, wherein a power amplifier comprises an inverter or a cyclo-converter.

6. The system according to any of the preceding claims, wherein said primary source of electric energy (SAP) comprises an electric battery or N electric batteries (BAT1, BAT2, BAT3) connected respectively to said N conversion elements (EM1, EM2, EM3) or a sector supply, or N sector supplies connected respectively to said N conversion elements (EM1, EM2, EM3).

7. The system according to any of the preceding claims, further comprising a sensor for measuring the angular position (CA) of the rotor of said machine (MSDE) and at least one feedback loop between said sensor for measuring the angular position (CA) of the rotor and a control unit (UC1, UC2, UC3).

8. The system according to any of the preceding claims, comprising at least one sensor for measuring the current (CC1, CC2, CC3, CC4, CC5, CC6) supplied by a secondary supply source to a virtual two-phase machine at 90° formed by one of said pairs of branches ((B1, A2), (C1, B2), (A1, C2)), and at least one feedback loop between said sensor for measuring current (CC1, CC2, CC3, CC4, CC5, CC6) and a control unit (UC1, UC2, UC3).

9. The system according to any of the preceding claims, wherein said control units (UC1, UC2, UC3) comprise an input that receives a function command (cde) for said double-star synchronous machine (MSDE) with unconnected neutrals (N1, N2).

10. The system according to Claim 9, wherein said function command (cde) comprises at least one parameter for the function of said double-star synchronous machine (MSDE) with unconnected neutrals (N1, N2) from the rotor rotation speed, the pair to be supplied by the rotor, the electric voltage at the limits of said electric machine, the intensity of electric current in a branch of the electric machine, or the intensity of the electric current supplied by said primary source of electric energy.

11. A method for controlling a double-star synchronous machine (MSDE) with unconnected neutrals (N1, N2), the first and second stars, each with N first branches (A1, B1, C1) spaced regularly and N second branches (A2, B2, C2) spaced regularly, being offset from one another by an angle such that said 2N branches form N pairs ((B1, A2), (C1, B2) and (A1, C2)) formed by a first branch and a second branch separated by an angle substantially equal to 90°, N being greater than or equal to three, **characterised in that** N respective control units (UC1, UC2, UC3) of two of said secondary supply sources associated with one of said pairs of branches ((B1, A2), (C2, B2) and (A1, C2)) are used.
